(19) Europäisches Patentamt
European Patent Office
Office européen des brevets

(11) EP 0 539 735 B1

(12) EUROPÄISCHE PATENTSCHRIFT

(45) Veröffentlichungstag und Bekanntmachung des Hinweises auf die Patenterteilung:
06.03.1996 Patentblatt 1996/10

(51) Int. Cl.$^6$: B07C 5/34, G06K 1/12

(21) Anmeldenummer: 92116503.1

(22) Anmeldetag: 26.09.1992

(54) **Verfahren und Vorrichtung zur Beaufschlagung bewegter Gebinde mit einem Laserstrahl**

Method and device for exposing moved containers to a laser beam

Procédé et dispositif d'exposition de récipients mobiles à un rayonnement laser

(84) Benannte Vertragsstaaten:
AT DE NL SE

(30) Priorität: 01.11.1991 CH 3199/91

(43) Veröffentlichungstag der Anmeldung:
05.05.1993 Patentblatt 1993/18

(73) Patentinhaber: ELPATRONIC AG
CH-6303 Zug (CH)

(72) Erfinder: Gross, Norbert
CH-8953 Dietikon (CH)

(56) Entgegenhaltungen:
EP-A- 0 354 362          FR-A- 2 234 613
FR-A- 2 270 018          GB-A- 2 134 449
US-A- 4 967 070

**Beschreibung**

Die Erfindung betrifft ein Verfahren gemäss Anspruch 1 bzw. eine Vorrichtung gemäss Anspruch 3.

Es ist bekannt, Gebinde, insbesondere mehrfach verwendbare PET-Flaschen, in Inspektionsmaschinen zu inspizieren und auch mit einem Code zu versehen. Die Inspektion umfasst ins besondere die Prüfung der Flasche auf Beschädigungen und/oder das Lesen eines oder mehrerer an der Flasche vorhandener Codesymbole. In der Regel wird durch die Inspektionsmaschine mindestens ein weiteres Codesymbol aufgebracht. Diese Aufbringung bzw. Einschmelzung des Codesymbols und gegebenenfalls das Lesen von Codesymbolen erfolgen mittels mindestens eines Laserstrahls, der im allgemeinen an gewünschter, vorbestimmter Stelle auf die Flasche gerichtet wird. Auch die Prüfung auf Beschädigungen kann mittels Laserstrahlen erfolgen.

Bekannte Anlagen zur Inspektion und/oder Codierung von PET-Flaschen mit Laserstrahlung sind einerseits durch eine statische Strahlführung gekennzeichnet. Die zu bearbeitenden Teile werden so vor dem Strahl positioniert, dass die Codierfläche vom Strahl beaufschlagt wird. Dazu muss die Transportbewegung für die Dauer des Codiervorgangs unterbrochen werden oder die Codierung muss in kürzester Zeit vorgenommen werden. Die Nachteile dieser Konzeption liegen in den hohen Beschleunigungen und geringer Produktivität von Laser und Maschine.

Aus US-A-4 967 070 ist es andererseits bekannt, bei einer Codeleseeinrichtung für den Code eines auf einer Karussellförderanlage geförderten Behälters einen beweglichen Spiegel vorzusehen, der der Behälterbewegung folgt. Die gezeigte Anordnung benötigt aber viel Platz.

Aus GB-A-2 134 449 ist weiter eine Einrichtung zur Aufbringung eines Codes mittels Laserstrahl bekannt, bei der keine Verfolgung des Gegenstandes vorgesehen ist, bei der aber ein beweglicher Spiegel den Laserstrahl zeitweise ablenkt, um den Strahl durch mehr als eine Maske hindurch auf den zu markierenden Gegenstand aufzubringen.

Der Erfindung liegt deshalb die Aufgabe zugrunde, Gebinde, insbesondere aber PET-Flaschen, während des Durchlaufs durch die Inspektionsmaschine mittels eines Laserstrahls zu bearbeiten und/oder zu vermessen bzw. zu inspizieren, wobei diese mit möglichst hoher Kadenz und Produktivität erfolgen soll.

Diese Aufgabe wird durch das Verfahren gemäss Anspruch 1 bzw. durch die Vorrichtung gemäss Anspruch 3 gelöst.

Vorzugsweise wird das Verfahren bei PET-Flaschen verwendet, um auf diese Flaschen Codesymbole aufzubringen.

Bei einer Ausführungsform befindet sich innerhalb der Hohlwelle im Strahlengang die Maske und darunter ein zweiter Umlenkspiegel, der den Strahl 90° radial ablenkt. Ist dieser Umlenkspiegel fest auf der Achse montiert, so wir der Laserstrahl eine konstante Position in bezug auf die Karussellachse einhalten, unabhängig von der Rotationsgeschwindigkeit des Karussells.

Unmittelbar hinter dem zweiten Spiegel kann eine Linse oder ein Parabolspiegel angeordnet werden, um die Maske auf die Flasche abzubilden.

Sinnvollerweise wird diese Anordnung ergänzt durch je einen weiteren Umlenkspiegel gegenüber den Flaschenhaltern, mit dem die Feinpositionierung des Strahles erfolgt.

Im folgenden werden Ausführungsarten der Erfindung anhand der Zeichnungen näher erläutert. Dabei zeigt:

Figur 1 eine Gesamtansicht einer Inspektionsmaschine;
Figur 2 eine vereinfachte Draufsicht auf das Karussell der Inspektionsmaschine nach Figur 1;
Figur 3 eine schematische Teilansicht des Karussells einer erfindungsgemässen Inspektionsmaschine;
Figur 4 eine weitere Ausführungsform der Erfindung; und
Figur 5 eine weitere, ebenfalls nur schematisch und teilweise dargestellte Ausführungsform der Erfindung.

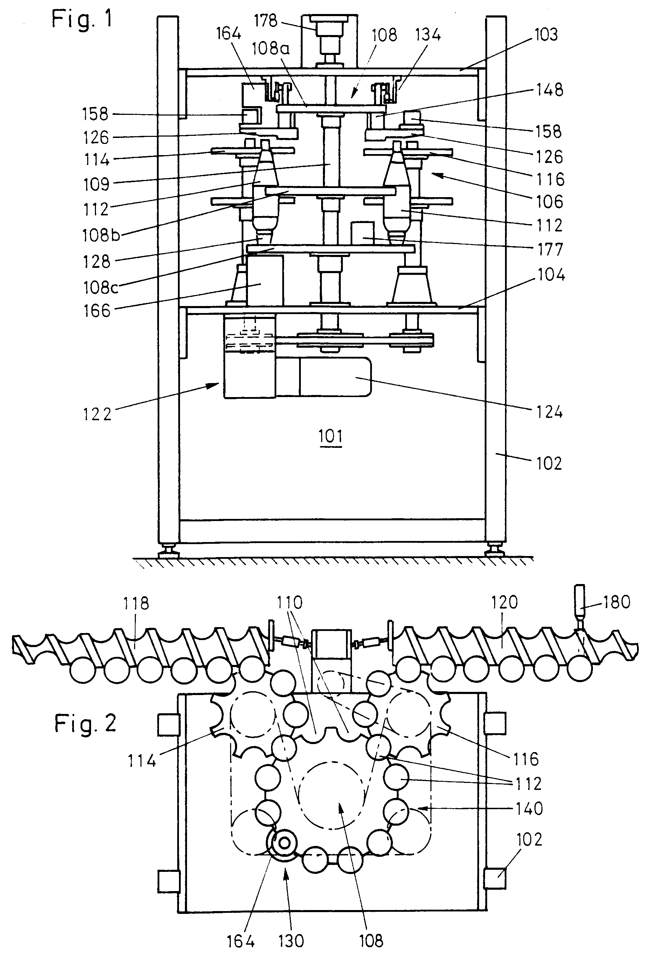

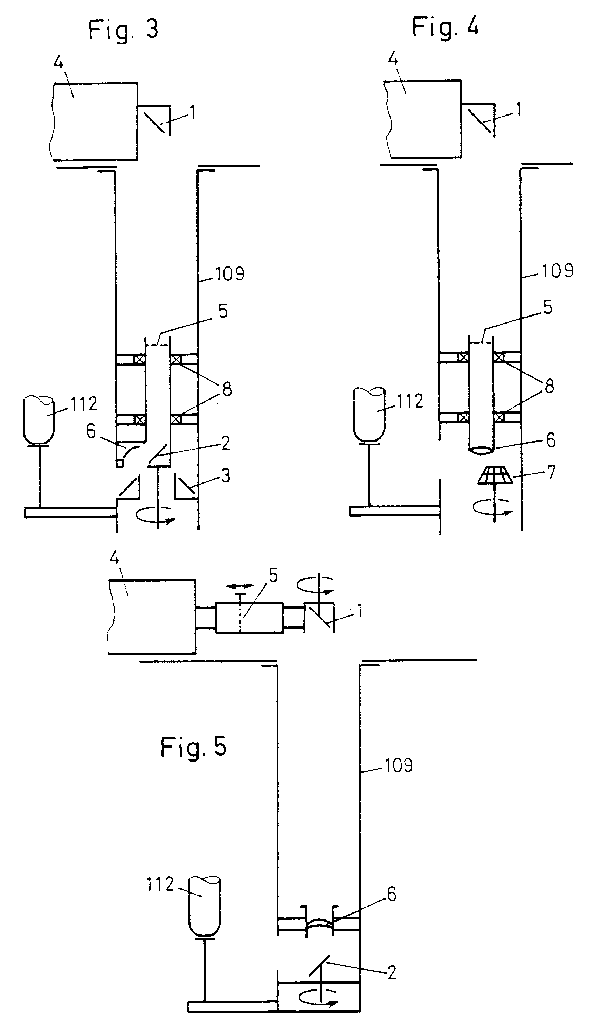

In den Figuren 1 und 2 ist eine an sich bekannte Inspektionsmaschine gezeigt, welche zum besseren Verständnis der nachfolgenden Ausführungsbeispiele der Erfindung zunächst kurz erläutert werden soll. Diese spezielle Inspektionsmaschine ist aber lediglich als Beispiel und zum besseren Verständnis der Figuren 3 bis 5 dargestellt; die Erfindung kann ohne weiteres auch bei anderen Inspektionsmaschinen angewendet werden.

Die Maschine ist in der Fig. 1 insgesamt mit 101 bezeichnet. Sie weist ein Gestell 102 mit einer oberen Tragplatte 103 und einer unteren Tragplatte 104 auf, zwischen denen eine insgesamt mit 106 bezeichnete Karusselleinrichtung befestigt ist. Die Karusselleinrichtung 106 weist ein zentrales Karussell 108 mit zwölf Aufnahmeinrichtungen 110 für Flaschen 112 sowie zwei kleinere Karussells 114, 116 mit jeweils acht Aufnahmeeinrichtungen auf. Die Karusselleinrichtung 106 ist Teil einer Fördereinrichtung, mit der die Flaschen 112 in eine Erfassungsstation 130 zur Prüfung und zum Codelesen und eine Kennzeichnungsstation 140 zum Codeschreiben bewegt werden, was weiter unten noch näher beschrieben ist. Die beiden kleineren Karussells 114, 116 fördern in Verbindung mit zwei Schneckenförderern 118, 120 die Flaschen 112 in die bzw. aus der Vorrichtung 101. Unter der unteren Tragplatte 104 ist ein gemeinsames Antriebssystem 122 befestigt, das einen Getriebemotor 124 umfasst, der über im einzelnen nicht näher bezeichnete Zahnriemenscheiben und Zahnriemen die Karusselleinrichtung 106 und die Schneckenförderer 118, 120 antreibt.

Das zentrale Karussell 108 besteht aus einem oberen Hauptkarussell 108a, einem mittleren Hauptkarussell 108b und einem unteren Hauptkarussell 108c, die auf einer gemeinsamen Welle 109 befestigt sind. Die Aufnahmeeinrichtungen 110 bestehen aus zwölf im Querschnitt halbkreisförmigen Ausnehmungen an dem mittleren Hauptkarussell 108b, zwölf an dem oberen Hauptkarussell 108a vorgesehenen Köpfen 126 (nur zwei sind in Fig. 1 sichtbar) und zwölf an dem unteren Hauptkarussell 108c vorgesehenen drehbaren Sitzen 128 zum Aufnehmen, Einspannen bzw. Aufsetzen der Flaschen 112. Jeder Kopf 126 ist an dem oberen Hauptkarussell 108a mit einer Kurvenbahn vertikal beweglich befestigt. Der Verlauf oder die form der Kurvenbahn ist so gewählt, dass der Kopf 126 im Bereich des Karussells 114 mit Abstand oberhalb der Flaschenmündung angeordnet ist, dass während der Bewegung der Flasche 112 in die Erfassungsstation 130 auf die Flaschenmündung abgesenkt wird und wenigstens bis zum Erreichen der Kennzeichnungsstation 140 abgesenkt bleibt und schliesslich wieder von der Flasche abgehoben und in seine ursprüngliche Höhe zurückbewegt wird, in der er Abstand von der Flaschenmündung hat.

Die bis hierher beschriebene Vorrichtung zum Kennzeichnen von wiederbefüllbaren transparenten Flaschen arbeitet, kurz zusammengefasst, folgendermassen:

Nachdem die Flasche 112 am Einlass der Vorrichtung den Schneckförderer 118 und das Karussell 114 passiert hat, wird sie in den Aufnahmeeinrichtungen 110 des zentralen Karussells 108 vertikal eingespannt, indem der Kopf 126 abgesenkt wird. Nach dem Einspannen ist etwas Zeit verfügbar, um Schwingungen abklingen zu lassen. Dann passiert die Flasche 112 die Erfassungsstation 130, in der die Flasche inspiziert wird und ein bereits auf der Flasche befindlicher Code gelesen wird. Diese Information wird zu einem Hauptcontroller und von hier zu einem Karussellmikrocontroller übertragen. Der Karussellmikrocontroller steuert die Schrittmotoren 158 an, um die Flasche 112 in die Position zu bringen, in der sie mit einem neuen Codesymbol gekennzeichnet werden kann. Nach dem Aufbringen des neuen Codesymbols wird die Flasche gelöst, indem der Kopf 126 angehoben wird. Das Karussell 116 und der Schneckenförderer 120 am Auslass der Vorrichtung 101 befördern die Flasche 112 aus der Vorrichtung 101 hinaus.

Figur 3 zeigt nun schematisch einen Teil des Karussells mit der als Hohlwelle ausgebildeten Achse 109 des Karussells sowie nur eine beispielhaft dargestellt im Karussell befindliche Flasche 112, welche die Hohlwelle umläuft und welche im gezeigten Beispiel mit einem Code versehen werden soll.

Der Strahl wird mittels Umlenkspiegel 1 exakt in die Karussellachse eingespiegelt. So kann er durch einen, zentrisch in der Achse fest montierten Umlenkspiegel 2 radial auf einen beliebigen Punkt auf dem Karussellumfang abgelenkt werden und bleibt bei der Drehung des Karussels auf diesen Punkt gerichtet.

Der Laser 4 wird fest auf der Maschine montiert, so dass der standardmässig vorhandene erste Umlenkspiegel 1 den Strahl zentrisch in die als Hohlwelle ausgeführte Karussellachse 109 umlenkt.

Innerhalb der Hohlwelle befindet sich im Strahlengang die Maske 5 mit dem Muster des Codes und darunter ein zweiter Umlenkspiegel 2, der den Strahl um 90° radial ablenkt. Ist dieser Umlenkspiegel 2 fest auf der Achse montiert bzw. wird der Spiegel synchron zur Hohlwelle 109 bewegt, so wird der Laserstrahl eine konstante Position in bezug auf die Karussellachse einhalten, unabhängig von der Rotationsgeschwindigkeit des Karussells.

Unmittelbar hinter dem zweiten Spiegel kann eine Linse oder ein Parabolspiegel 6 als Fokussierspiegel angeordnet werden, um die Maske auf die Flasche abzubilden. Durch den Laserstrahl wird das Abbild der Maske in das PET-Flaschenmaterial eingebrannt.

Sinnvollerweise wird diese Anordnung ergänzt durch je einen weiteren Umlenkspiegel 3 gegenüber jedem Flaschenhalter (Pocket), wo auch jeweils ein Fenster in der Hohlwelle vorgesehen ist, mit dem die Feinpositionierung des Strahles erfolgt. Nach der Bearbeitung einer Flasche wird der Spiegel 2 bzw. die Strahlführung 5, 2 und 6 rasch zum nächsten Fenster bzw. Umlenkspiegel 3 positioniert, um die nächste Flasche zu bearbeiten.

Für die einwandfreie Funktion ist es notwendig, den Strahl in den mit Positionstoleranzen behafteten Aufbau optisch zu justieren. Dies kann auch Erweiterungen der Strahlführung mit zusätzlichen, vorgeschalteten Umlenkspiegeln beinhalten. Die rotierend in der Karussellachse angeordneten Elemente: Maskenhalter 5, Umlenkspiegel 2, Fokussieroptik 6 befinden sich in fixen Positionen zueinander und werden vorteilhaft in einer vorjustierten Baugruppe zusammengefasst und zentriert auf einen in der Karussellachse befindlichen Lagerring 8 montiert. Lediglich die Fokuslage muss einstellbar sein zur Feineinstellung der Schärfe der Abbildung.

Die letzen Umlenkspiegel 3 werden fix in den Umfang der Hohlwelle positioniert, hierbei genügt die Einstellbarkeit von zwei Kippwinkeln.

Nach Uebernahme einer Flasche ins Hauptkarussell wird sie durch den Bodenteller in konstante Rotation versetzt. Die Abbildungsoptik ist auf diese Flasche positioniert und folgt der Bewegung des Karussels. Es kann nun während der Drehung ein Code markiert werden. Nach Abschluss des Markiervorgangs muss die Optik auf die folgende Flasche positioniert werden.

Der offensichtliche Nachteil dieses Aufbaus, dass mit der Optik schnelle reversierende Drehbewegungen ausgeführt werden müssen, kann durch Verwendung eines Polygonspiegels 7 umgangen werden, wie in Figur 4 gezeigt. Dieser stellt vorteilhaft die letzte Umlenkeinheit der Strahlführung dar und wird direkt unter die Fokussieroptik montiert, so dass die Spiegelflächen im axial zentrierten Strahl liegen.

Das Polygon 7 enthält die gleiche Anzahl Spiegelflächen wie die Bitzahl der Codierung. Durch jede dieser Spiegelflächen wird der vertikal in die Karussellachse einfallende Strahl auf die Codierfläche der Flasche umgelenkt. Da sich die Flasche während der Codierung (drehend) mit dem Karussell weiterbewegt, ist es nötig den Strahl mitzuführen.

Das erfordert zunächst für den gepulst ablaufenden Codiervorgang, dass die Spiegelsegmente stets mittig getroffen werden, d.h. dass die Pulsfrequenz des Lasers über die Drehzahl des Polygons getriggert wird nach

$$f_{Laser} = \frac{\omega_p}{\phi_p} \text{ mit } \phi_p = \frac{360°}{n}$$

wobei

| | |
|---|---|
| f | Pulsfrequenz, |
| $\omega_p$ | Winkelgeschwindigkeit des Polygons, |
| $\phi_p$ ($\phi_k$) | Drehwinkel in der Zeit t, |
| n | Anzahl der Spiegelflächen. |

Dreht sich das Karussell in der Zeit t um einen Winkel $\phi_k$, so muss sich das Polygon um den Winkel $\phi_p$ drehen, damit die nächste, um den Winkel $\phi_k$ versetzte Spiegelfläche ausgerichtet ist. Dieses Drehzahlverhältnis von Karussell und Polygon ist unabhängig von der Geschwindigkeit. Die Codierpulse sind somit auf die Drehachse der Flasche ausgerichtet, der Abstand aufeinander folgender Codes ist dann nur von der Drehzahl der Flasche selbst abhängig.

Das Polygon 7 ist in der beschriebenen Ausführung ein Spzialfall von Polygonen, deren gemeinsames Kennzeichen ist, dass ihre Spiegelflächen jeweils um einen gleichen Winkel versetzt sind, d.h. die Spiegelflächen bilden Tangenten an eine Spirale. Mit solchen Polygonen sind auch optische Inspektionen möglich. Wird die Anzahl der Spiegelflächen erhöht, so kann ein Strahl einem auf dem Karussell befindlichen Objekt quasikontinuierlich nachgeführt werden. Die Länge der Nachführstrecke ist durch die Summe der einzelnen Versatzwinkel festgelegt.

Für Laserstrahlen grösseren Durchmessers (Codieren) sind plane Spiegelflächen notwendig, da es sonst zu einer Bildverzerrung kommt. Dagegen kann ein sphärischer Anschliff bei Einsatz von Strahlen kleinen Durchmessers notwendig werden, wenn hohe Anforderungen an die Positioniergenauigkeit gestellt werden und die Anzahl der Spiegelflächen begrenzt werden soll.

Eine weitere Ausführungsart ist in Figur 5 gezeigt, wobei gleiche Bezugsziffern gleiche Bauteile wie vorstehend bezeichnen. Bei diesem Beispiel ist die Maske 5 zwischen dem Laser 4 und dem ersten Spiegel 1 angeordnet. Die Abbildungsoptik 6 ist feststehend, während die Spiegel 1 und 2 synchron mit der Flasche 112 bewegt werden.

Ziel dieser Variante ist es, die Drehung des Strahles relativ zur Maske und die Drehung der Abbildung auf der Flasche zu eliminieren. Damit entfällt die Notwendigkeit Maske und Linse mit dem Karussell zu drehen.

Dazu wird die Maske vor dem ersten Umlenkspiegel montiert. Mit dem ersten Spiegel wird das Maskenbild gedreht und 90° umgelenkt. Der Strahl muss in der Spiegeldrehachse zentriert werden. In entsprechendem Abstand zur Maske befindet sich die Linse zentrisch im Strahl-/bzw. Karussellachse fest montiert (lediglich lineare Fokussierverstellung). Direkt unter der Linse ist ein zweiter Umlenkspiegel drehbar montiert, der den fokussierten Strahl auf die Flasche lenkt.

Beide Umlenkspiegel müssen synchron stets die gleichen Drehbewegungen ausführen und in der Karussellachse montiert sein. Die Drehung besteht aus

1. Drehung mit Karussellgeschwindigkeit über einen Winkel entsprechend Pocketteilung;
2. Schnelle Rückstellbewegung (ohne Laserbetrieb).

Vorteilhaft bei dieser Anordnung ist, dass lediglich zwei Spiegel bewegt werden müssen, und daher recht hohe Durchlaufgeschwindigkeiten erreicht werden.

Das Einstellen auf andere Flaschentypen (Winkel- und Abstandsänderungen) kann einfach durchgeführt werden.

Winkeländerung: nur eine Achse des unteren Umlenkspiegels einstellen.

Distanzänderungen: nur lineare Verstellung von Maske, Linse und unterem Spiegel.

Zugänglichkeit, Einstellbarkeit sind besser als bei den ersten zwei Varianten. Die Optiken innerhalb der Hohlwelle befinden sich alle im Zentrum, beste Auslegung für Staub/Wasserschutz.

**Patentansprüche**

1. Verfahren zur Beaufschlagung von durch eine Förderanlage bewegten Gebinden (112) mit mindestens einem Laserstrahl zur Inspektion und/oder Bearbeitung der Gebinde, wobei der Laserstrahl über eine Anordnung aus in bezug auf die Förderanlge feststehenden und/oder beweglichen Spiegeln (1,2,3; 1,7; 1,2) geführt wird, um während mindestens eines Abschnittes des Förderweges synchron mit einem der Gebinde (112) bewegt zu verlaufen und dieses zu beaufschlagen, wobei eine ein Karussel umfassende Förderanlage für die Gebinde vorgesehen ist (112), welches Karussell eine zentrale Hohlwelle (109) aufweist, in welche der Laserstrahl aus einer Laserlichtquelle (4) über einen ersten Spiegel (1) geführt wird und wobei innerhalb der Hohlwelle eine synchron mit dem Gebinde (112) bewegbare Strahlführung (2,3,5,6; 5,6,7; 2,6) vorgesehen ist.

2. Verfahren nach Anspruch 1, dadurch gekennzeichnet, dass durch den Laserstrahl mindestens ein Codesymbol auf das von einer PET-Flasche gebildete Gebinde aufgebracht wird.

3. Vorrichtung zur Beaufschlagung von durch eine Förderanlage bewegten PET-Flaschen (112), mit mindestens einem Laserstrahl zur Inspektion und/oder Bearbeitung der Flaschen, wobei der Laserstrahl über eine Anordnung aus in bezug auf die Förderanlage feststehenden und/oder beweglichen Spiegeln (1,2,3; 1,7; 1,2) geführt wird, um während mindestens eines Abschnittes des Förderweges synchron mit einer der Flaschen bewegt zu verlaufen und diese zu beaufschlagen, wobei eine ein Karussell umfassende Förderanlage für die Flaschen (112) vorgesehen ist, welches Karussell eine zentrale Hohlwelle (109) aufweist, in welche der Laserstrahl aus einer Laserlichtquelle (4) über einen ersten Spiegel (1) führbar ist und wobei innerhalb der Hohlwelle eine synchron mit der Flasche (112) bewegbare Strahlführung (2,3,5,6; 5,6,7; 2,6) vorgesehen ist.

4. Vorrichtung nach Anspruch 3, dadurch gekennzeichnet, dass die Strahlführung eine Maske (5), einen zweiten Spiegel (2) und einen Fokussierspiegel (6) umfasst.

5. Vorrichtung nach Anspruch 4, dadurch gekennzeichnet, dass der aus der Strahlführung austretende Laserstrahl über einen einer Flaschenhalterung zugeordneten Umlenkspiegel (3) aus der Hohlwelle (109) auf die Flasche (112) lenkbar ist.

6. Vorrichtung nach Anspruch 3, dadurch gekennzeichnet, dass die Strahlführung einen drehbaren Polygonspiegel (7) umfasst, welcher von dem durch eine Maske (5) und eine Fokussierlinse (6) geführten Laserstrahl beaufschlagt wird.

7. Vorrichtung nach Anspruch 3, dadurch gekennzeichnet, dass die Strahlführung einen zweiten Spiegel (2), eine Maske (5) und eine Fokussierlinse (6) umfasst, und dass der Laserstrahl durch den zweiten Spiegel (2) auf die Flasche (112) umlenkbar ist.

**Claims**

1. A process for the impingement of at least one laser beam on containers (112) which are moved by a conveying installation, for the inspection and/or processing of the containers, wherein the laser beam is led via an arrangement comprising mirrors (1,2,3; 1,7; 1,2) which are fixed and/or movable with respect to the conveying installation in order to travel so that it is moved synchronously with one of the containers (112) and to impinge on the latter during at least one section of the conveying distance, wherein a conveying installation comprising a carousel is provided for the containers (112), which carousel has a central hollow shaft (109) into which the laser beam from a laser light source (4) is led via a first mirror (1), and wherein a beam guide (2,3,5,6; 5,6,7; 2,6) which can be moved synchronously with the container (112) is provided inside the hollow shaft.

2. A process according to claim 1, characterised in that at least one code symbol is applied by the laser beam to the container formed by a PET bottle.

3. A device for the impingement of at least one laser beam on PET bottles (112) which are moved by a conveying installation, for the inspection and/or processing of the bottles, wherein the laser beam is led via an arrangement comprising mirrors (1,2,3; 1,7; 1,2) which are fixed and/or movable with respect to the conveying installation in order that it travels so that it is moved synchronously with one of the bottles and impinges on the latter during at least one section of the conveying distance, wherein a conveying installation comprising a carousel is provided for the bottles (112), which carousel has a central hollow shaft (109) into which the laser beam from a laser light source (4) can be led via a first mirror (1), and wherein a beam guide (2,3,5,6; 5,6,7; 2,6) which can, be moved synchronously with the bottle (112) is provided inside the hollow shaft.

4. A device according to claim 3, characterised in that the beam guide comprises a mask (5), a second mirror (2) and a focusing mirror (6).

5. A device according to claim 4, characterised in that the laser beam emerging from the beam guide can be directed from the hollow shaft (109) on to the bottle (112) via a deflection mirror (3) associated with a bottle holding device.

6. A device according to claim 3, characterised in that the beam guide comprises a rotatable polygonal mirror (7) which is impinged upon by the laser beam which is passed through a mask (5) and a focusing lens (6).

7. A device according to claim 3, characterised in that the beam guide comprises a second mirror (2), a mask (5) and a focusing lens (6), and that the laser beam can be deflected on to the bottle (112) by the second mirror (2).

**Revendications**

1. Procédé d'exposition de récipients (112) déplacés par une installation de transport, à au moins un faisceau laser en vue de l'inspection et/ou du traitement des récipients, le faisceau laser étant guidé par une disposition de miroirs (1,2,3; 1,7; 1,2) fixes et/ou mobiles par rapport à l'installation de transport, pour être déplacé de manière synchrone avec un des récipients (112) pendant au moins un tronçon du trajet de transport, et exposer celui-ci, dans lequel une installation de transport comprenant un carrousel

est prévue pour les récipients (112), le caroussel comprenant un arbre creux central (109), dans lequel le faisceau laser d'une source de lumière laser (4) est guidé par un premier miroir (1) et dans laquelle à l'intérieur de l'arbre creux est prévu un dispositif de guidage de faisceau (2,3;5,6,7;2,6) mobile de façon synchrone avec le récipient (112).

2. Procédé selon la revendication 1, caractérisé en ce qu'au moins un symbole codé est appliqué par le faisceau laser au récipient qui est formé d'une bouteille en polyéthylène téréphtalate.

3. Dispositif d'exposition de bouteilles en polyéthylènethérephtalate (112) déplacées par une installation de transport, à au moins un faisceau laser en vue de l'inspection et/ou du traitement des bouteilles, le faisceau laser étant guidé par une disposition de miroirs (1,2,3; 1,7;1,2) fixes et/ou mobiles par rapport à l'installation de transport, pour être déplacé de manière synchrone avec une des bouteilles (112) pendant au moins un tronçon du trajet de transport, et exposer celui-ci, dans lequel une installation de transport comprenant un caroussel est prévue pour les bouteilles (112), le caroussel comprenant un arbre creux central (109), dans lequel le faisceau laser d'une source de lumière laser (4) est guidé par un premier miroir (1) et dans laquelle à l'intérieur de l'arbre creux est prévu un dispositif de guidage de faisceau (2,3,5,6;5,6,7;2,6) mobile de façon synchrone avec la bouteille (112);

4. Dispositif selon la revendication 3, caractérisé en ce que le dispositif de guidage de faisceau comprend un masque (5), un deuxième miroir (2) et un miroir de focalisation (6).

5. Dispositif selon la revendication 4, caractérisé en ce que le faisceau laser sortant du dispositif de guidage de faisceau peut être dévié de l'arbre creux (109) en direction de la bouteille (112) par un miroir de déviation (3) qui est associé à un support de la bouteille.

6. Dispositif selon la revendication 3, caractérisé en ce que le dispositif de guidage de faisceau comprend un miroir polygonal rotatif (7) qui est exposé à un faisceau laser qui est guidé à travers un masque (5) et une lentille de focalisation (6).

7. Dispositif selon la revendication 3, caractérisé en ce que le dispositif de guidage de faisceau comprend un deuxième miroir (2), un masque (5) et une lentille de focalisation (6) et que le faisceau laser peut être dévié vers la bouteille (112) par le deuxième miroir.

Fig. 1

Fig. 2

Fig. 3

Fig. 4

Fig. 5